# EUROPEAN PATENT APPLICATION

(11) **EP 3 691 247 A1**
(43) Date of publication of application: **05.08.2020**
(21) Application number: 18862833.3
(22) Date of filing: 26.09.2018
(51) Int. Cl.: H04N 5/232, H04N 5/247, H04N 7/18

(54) **INFORMATION PROCESSING SYSTEM**

(30) Priority: 26.09.2017 US 201762563220 P
(71) Applicant: Sony Semiconductor Solutions Corporation, Atsugi-shi, Kanagawa 243-0014 (JP)
(72) Inventor: OOTA, Yoshinori, Atsugi-shi Kanagawa 243-0014 (JP)
(74) Representative: Müller Hoffmann & Partner
(86) International application number: PCT/JP2018/035737
(87) International publication number: WO 2019/065757

(57) **Abstract**

[Object]

To guess motion of an object included in a video from a plurality of videos.

[Solving Means]

According to the present disclosure, there is provided an information processing system including a plurality of image capturing devices and a server that acquires video information from a plurality of the image capturing devices, in which
the server has
an object recognizing section that recognizes a particular object from the video information, and
a guessing section that guesses motion of the particular object obtained on the basis of the video information.

## Description

### [Technical Field]

The present disclosure relates to an information processing system.

### [Background Art]

Heretofore, PTL 1 mentioned hereinbelow, for example, discloses a monitoring camera system including a plurality of monitoring cameras and a recorder for recording videos captured by the monitoring cameras, in which the recorder determines individual setting values of the monitoring cameras according to videos received from the monitoring cameras.

### [Citation List]

### [Patent Literature]

[PTL 1]
JP 2018-121163A

### [Summary]

### [Technical Problem]

Recently, urban areas have seen monitoring cameras in widespread use, and information regarding various objects can be acquired from videos captured by the monitoring cameras. For example, since suspicious persons and suspicious vehicles may be identified from images captured by monitoring cameras, the monitoring cameras are playing a role in quickly solving crimes and preventing crimes.

However, in an attempt to identify a moving object (e.g., a suspicious person), though a video captured by a monitoring camera may be effective to identify the object, it has difficulty in identifying subsequent motion of the object.

Accordingly, there has been a demand for guessing motion of an object included in a video, from a plurality of videos.

### [Solution to Problem]

According to the present disclosure, there is provided an information processing system including a plurality of image capturing devices and a server that acquires video information from a plurality of the image capturing devices, in which the server has a synchronizing section that synchronizes times of plural pieces of the video information acquired from a plurality of the image capturing devices, an object recognizing section that recognizes a particular object from the video information, and a guessing section that guesses motion of the particular object obtained on the basis of the video information.

### [Advantage Effect of Invention]

According to the present disclosure, as described above, motion of an object included in a video is guessed from a plurality of videos.

Note that the above advantage is not necessarily restrictive, and any advantages referred to in the present disclosure or other advantages that can be grasped from the present disclosure may be presented together with or instead of the above advantage.

### [Brief Description of Drawings]

[FIG. 1]

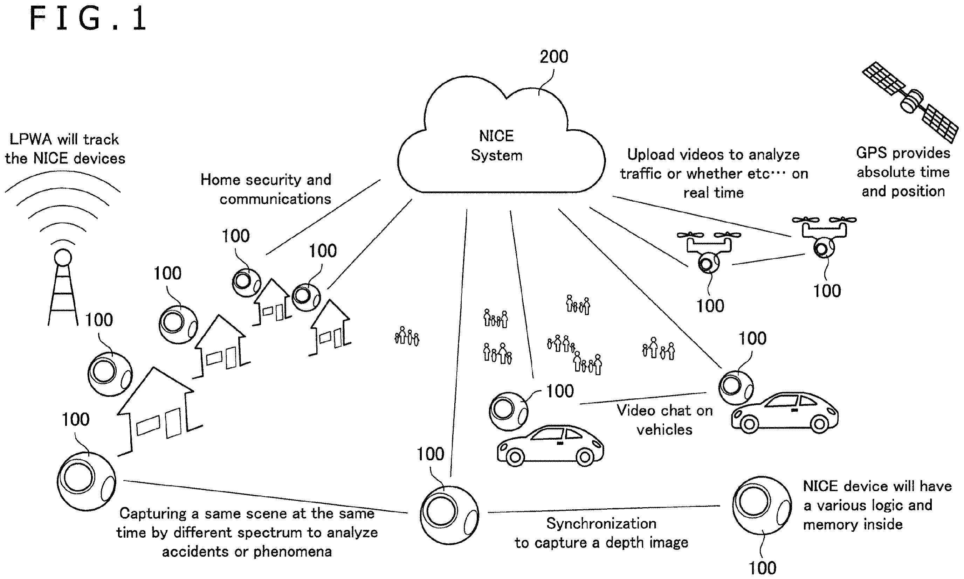

   FIG. 1 is a schematic diagram illustrating an entire makeup of a NICE system (server) and NICE capture devices.
[FIG. 2]

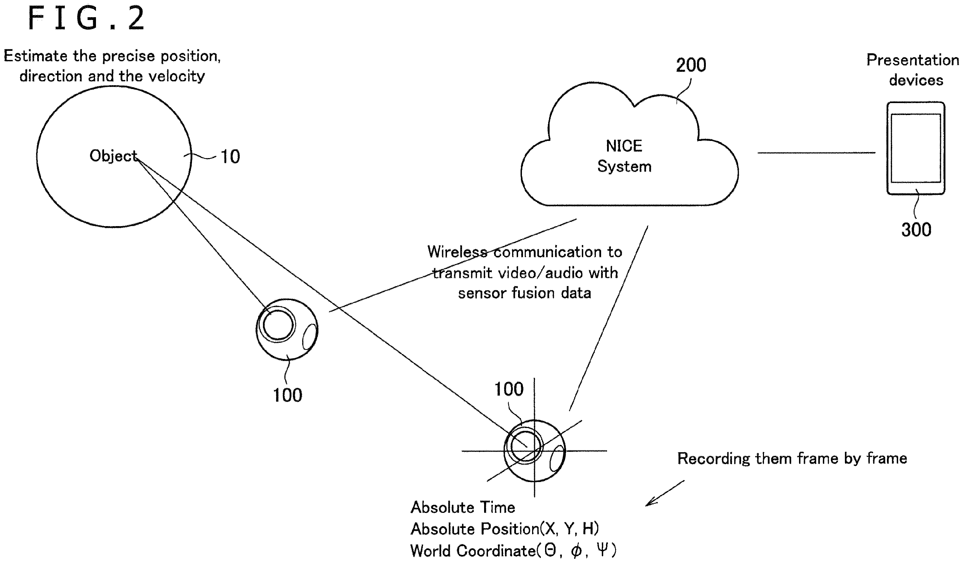

   FIG. 2 is a schematic diagram illustrating specifications required of NICE devices.
[FIG. 3]

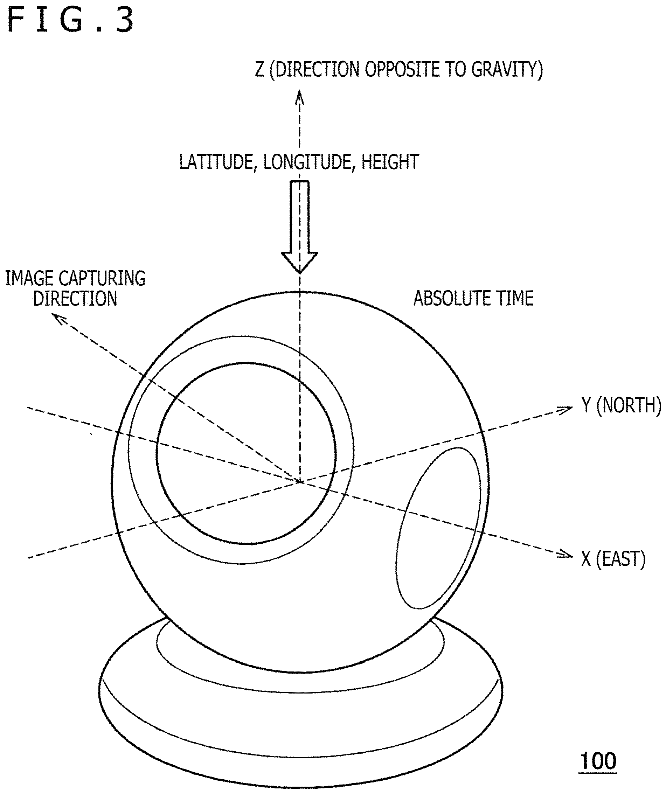

   FIG. 3 is a schematic diagram illustrating a NICE capture device.
[FIG. 4]

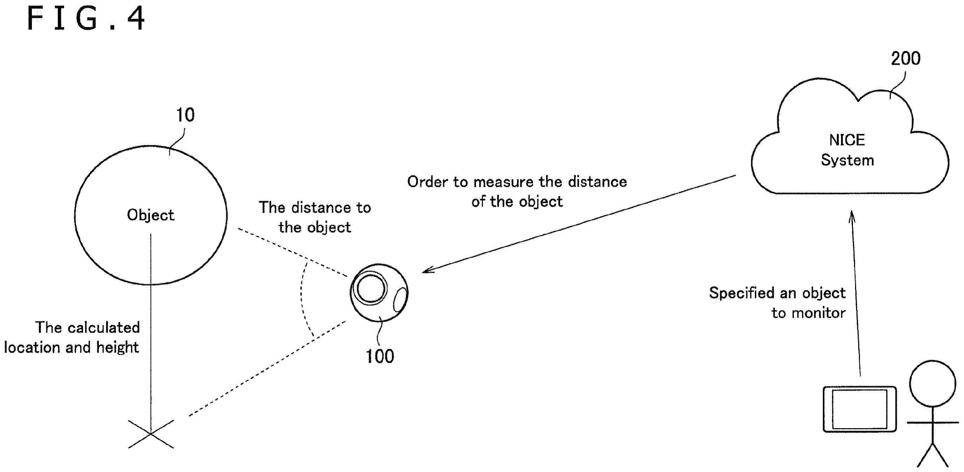

   FIG. 4 is a schematic diagram that is explanatory of a process of tracking an object in real time.
[FIG. 5]

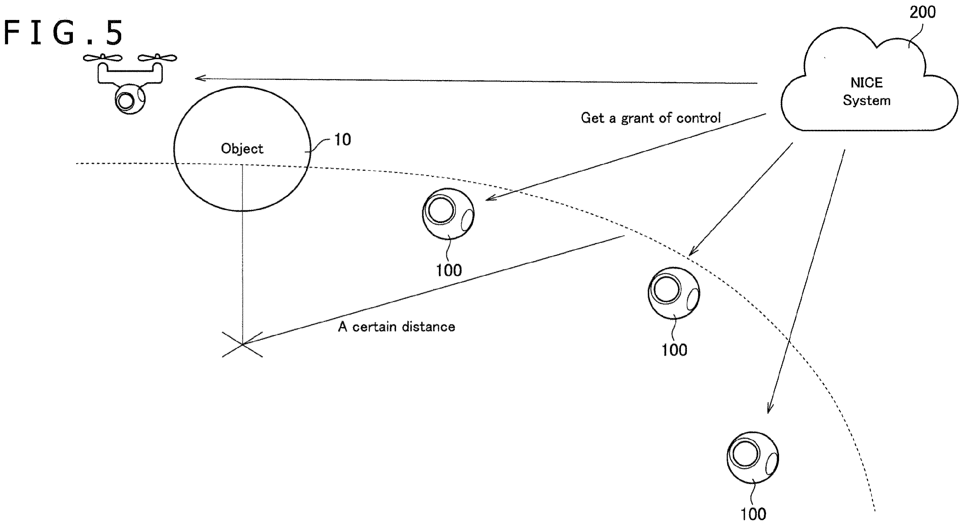

   FIG. 5 is a schematic diagram that is explanatory of the process of tracking an object in real time.
[FIG. 6]

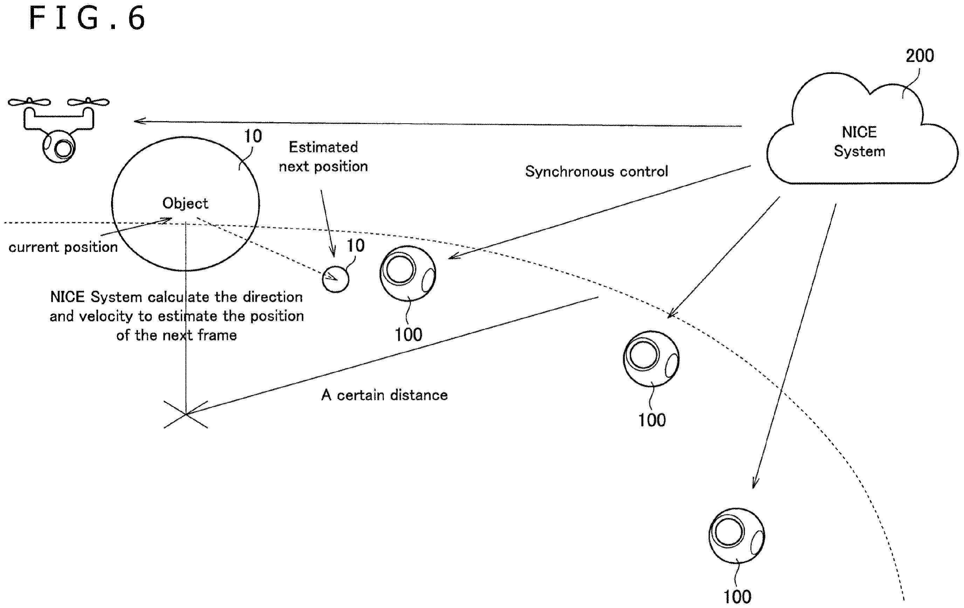

   FIG. 6 is a schematic diagram that is explanatory of the process of tracking an object in real time.
[FIG. 7]

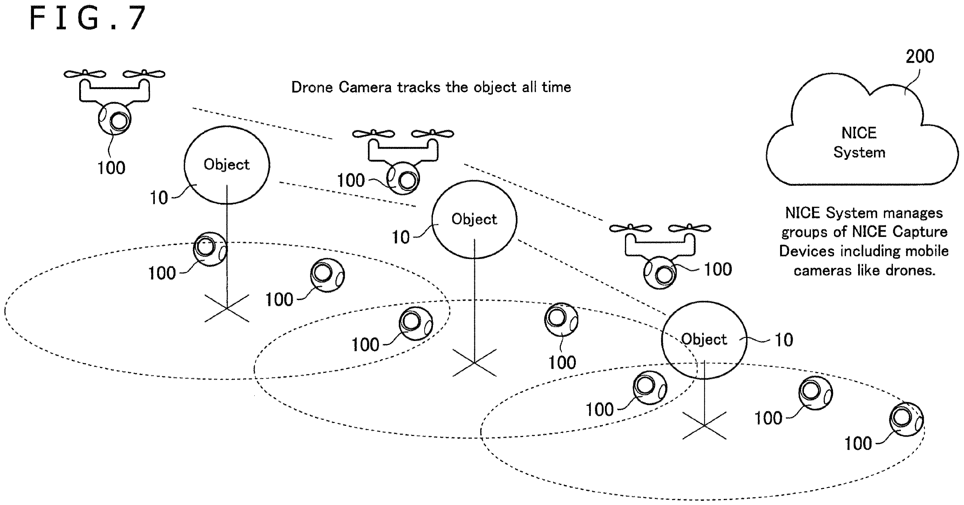

   FIG. 7 is a schematic diagram that is explanatory of the process of tracking an object in real time.
[FIG. 8]

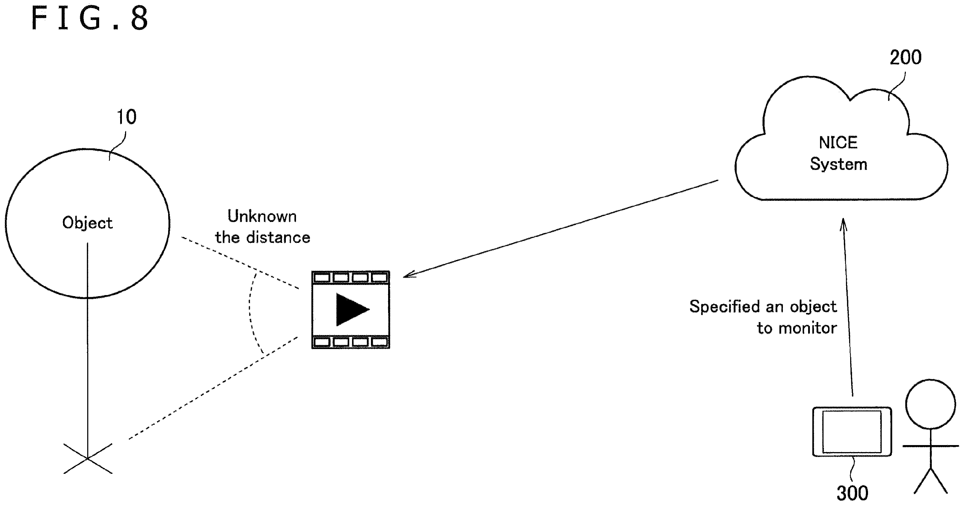

   FIG. 8 is a schematic diagram that is explanatory of a process of tracking an object from a recorded video.
[FIG. 9]

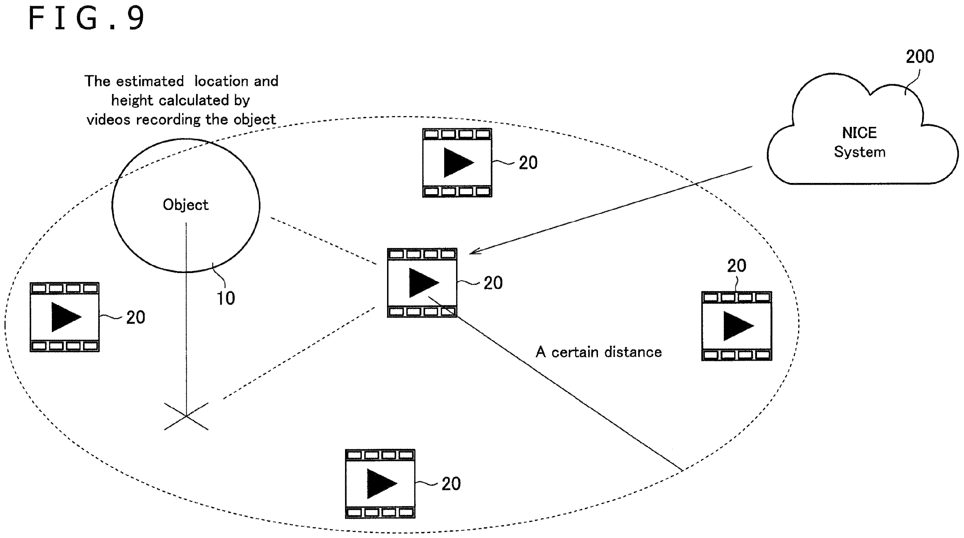

   FIG. 9 is a schematic diagram that is explanatory of the process of tracking an object from recorded videos.
[FIG. 10]

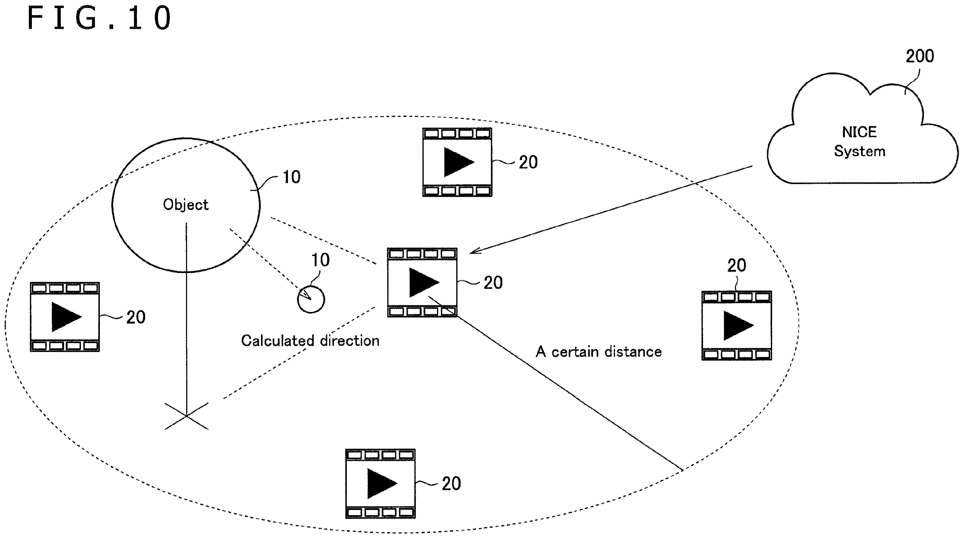

   FIG. 10 is a schematic diagram that is explanatory of the process of tracking an object from recorded videos.
[FIG. 11]

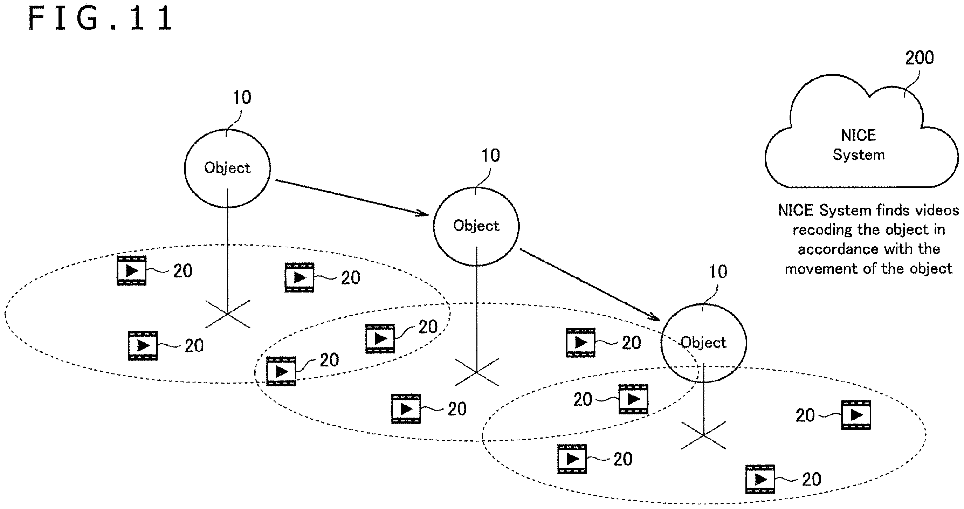

   FIG. 11 is a schematic diagram that is explanatory of the process of tracking an object from recorded videos.
[FIG. 12]

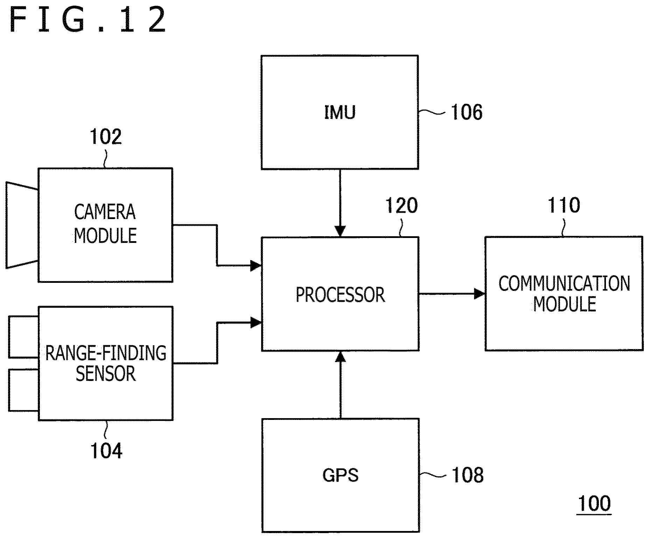

   FIG. 12 is a schematic diagram that is explanatory of the process of tracking an object from recorded videos.
[FIG. 13]

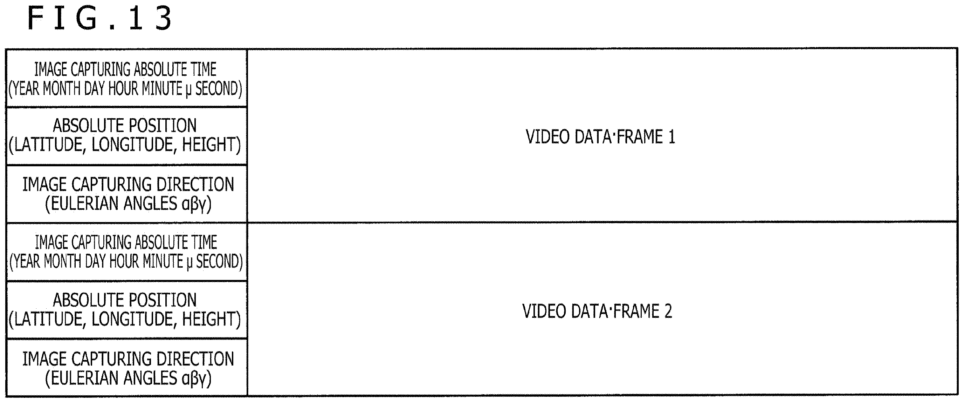

   FIG. 13 is a schematic diagram illustrating a video recording format by way of example.
[FIG. 14]

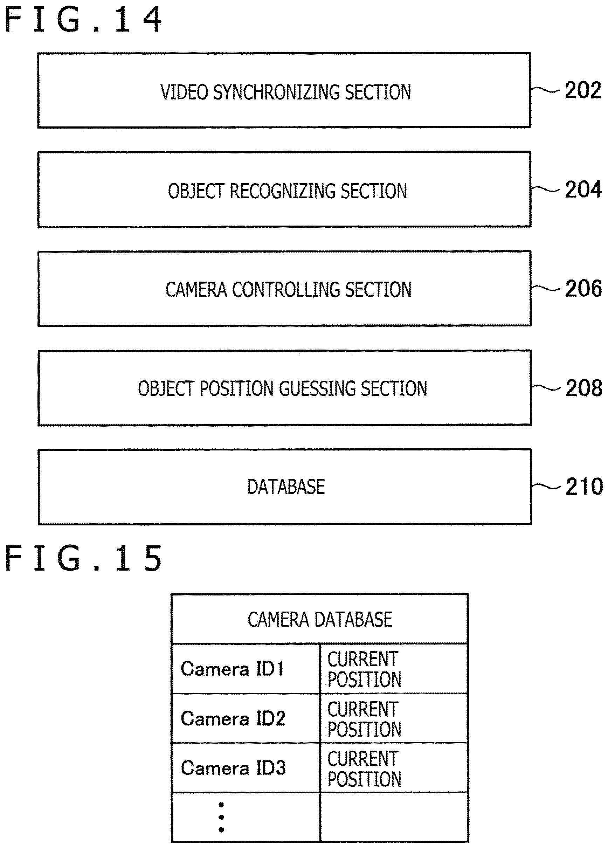

   FIG. 14 is a schematic diagram illustrating by way of example the configuration of a server of the NICE system.
[FIG. 15]
   FIG. 15 is a schematic diagram illustrating information of a camera database relating to NICE capture devices, among pieces of information stored in a database.
[FIG. 16]

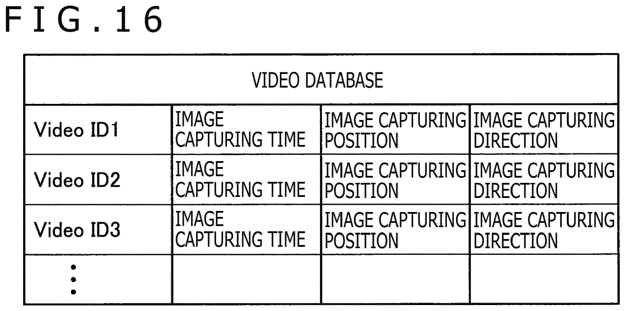

   FIG. 16 is a schematic diagram illustrating information of a video database of the NICE system.
[FIG. 17]

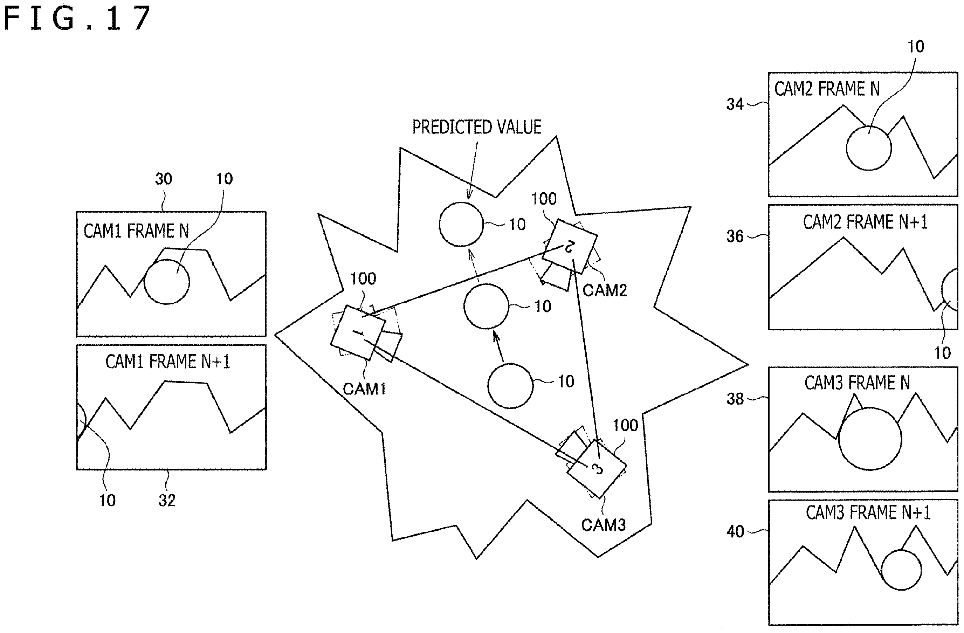

   FIG. 17 is a schematic diagram that is explanatory of a process of guessing the position of an object.
[FIG. 18]

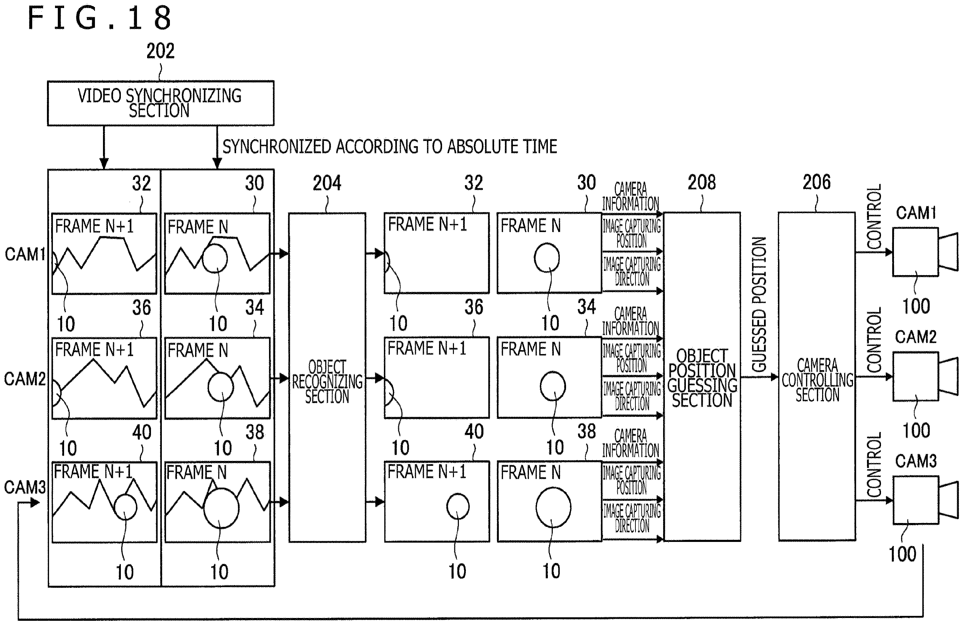

   FIG. 18 is a schematic diagram that is explanatory of the process of guessing the position of an object.
[FIG. 19]

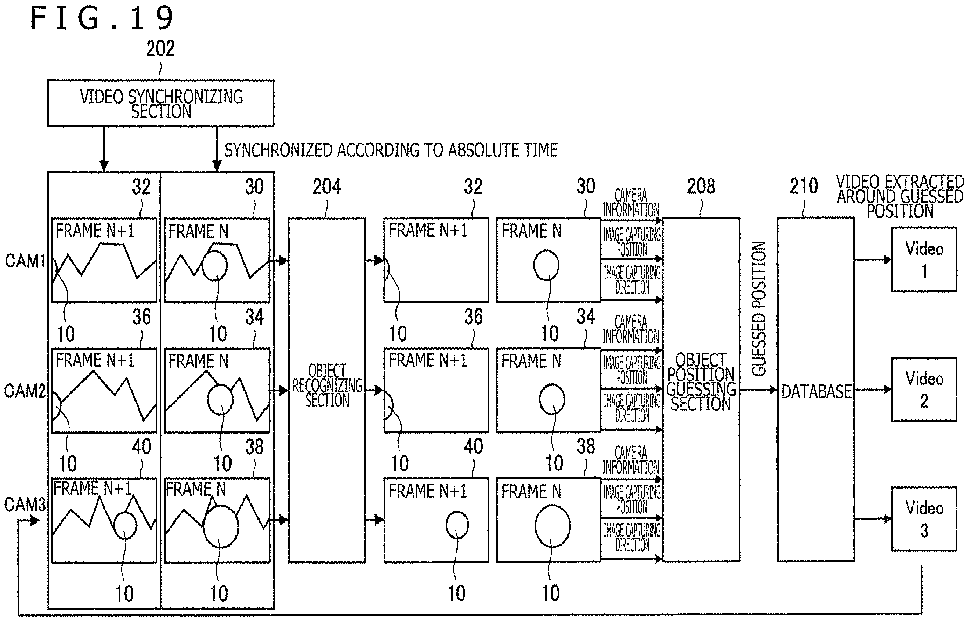

   FIG. 19 is a schematic diagram that is explanatory of the process of guessing the position of an object.
[FIG. 20]

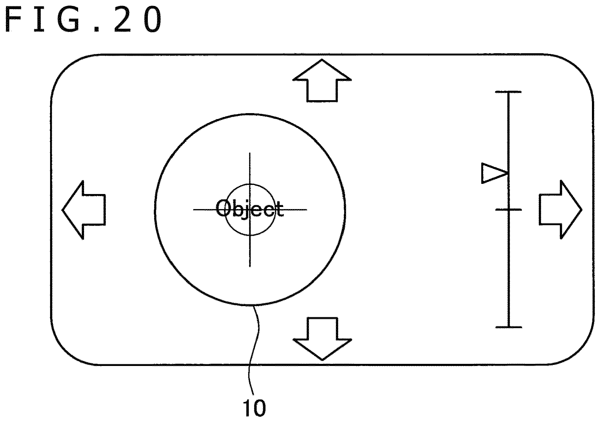

   FIG. 20 is a schematic diagram illustrating the manner in which the user manipulates the screen of a NICE presentation device 300 to specify an object 10.
[FIG. 21]

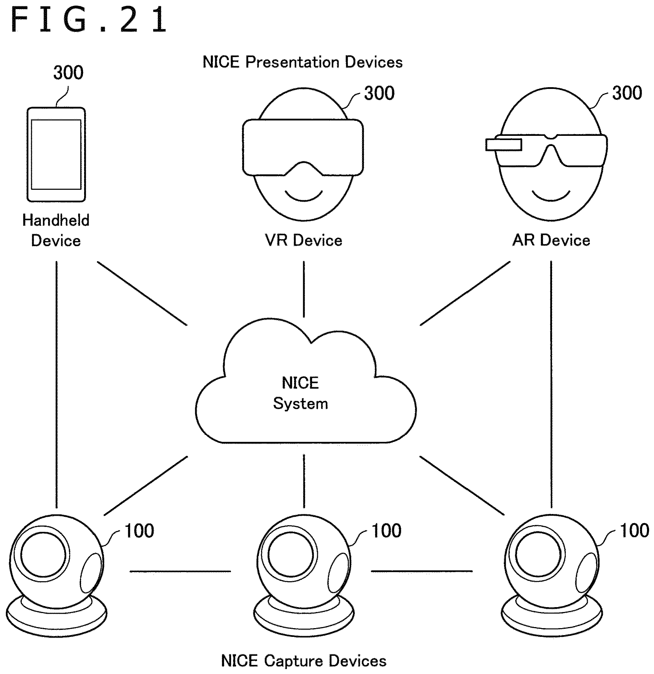

   FIG. 21 is a schematic diagram illustrating the manner in which NICE capture devices and NICE presentation devices are connected to the NICE system.
[FIG. 22]

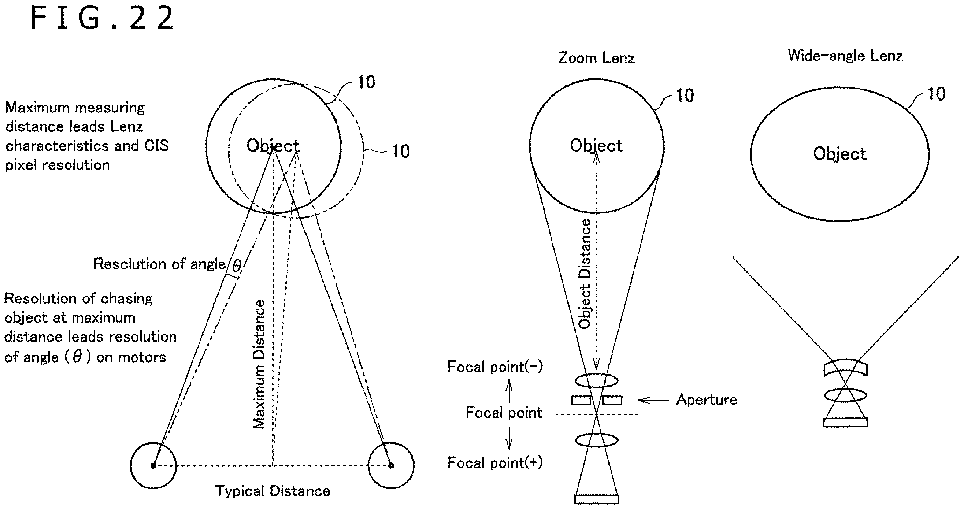

   FIG. 22 is a schematic diagram illustrating optical lenses included in camera modules.
[FIG. 23]

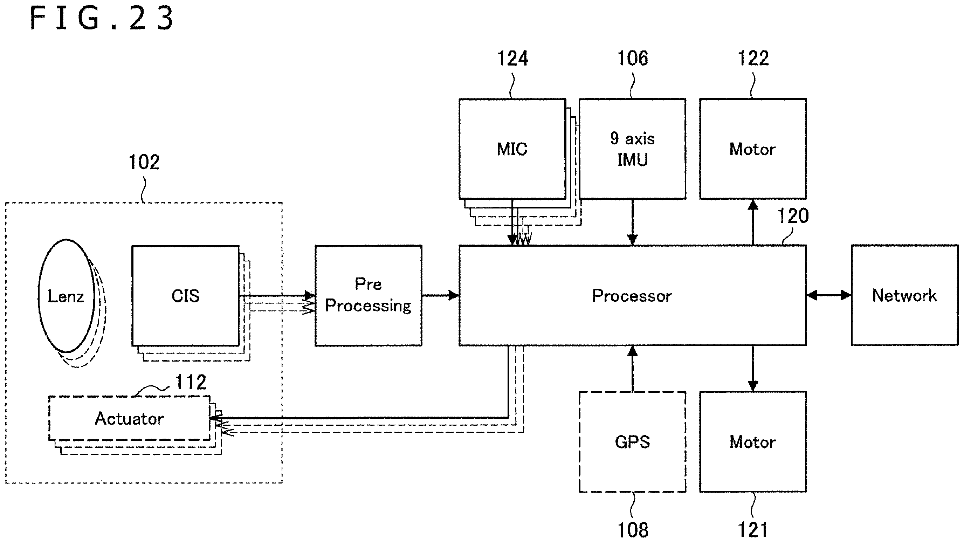

   FIG. 23 is a schematic diagram illustrating by way of example another configuration of a NICE capture device.
[FIG. 24]

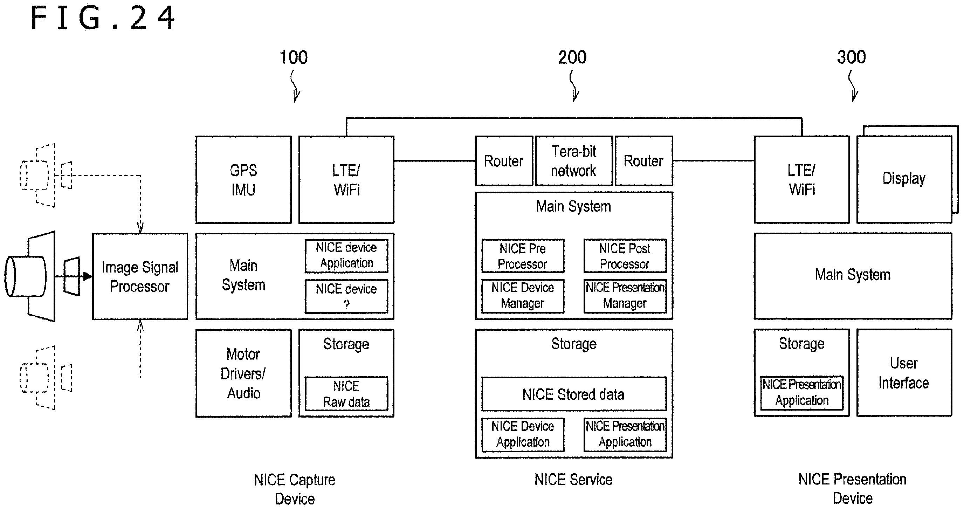

   FIG. 24 is a schematic diagram illustrating by way of example a specific configuration of a NICE capture device, a NICE presentation device, and a NICE system.

### [Description of Embodiment]

A preferred embodiment of the present invention will hereinafter be described in detail with reference to the accompanying drawings. Note that, in the present description and drawings, those components which have essentially identical functions and configurations are denoted by identical reference signs and their redundant description will be omitted.

Note that the embodiment will be described in the following sequence.
1. Concept of NICE system
2. Outline of NICE system
   2.1. NICE watcher
   2.2. NICE chaser
   2.3. NICE 3D world
3. Outline of NICE capture device
   3.1. Configurational example of NICE capture device
4. Configurational example of NICE system (server)

### 1. Concept of NICE system

A NICE system (Network of Intelligent Camera Ecosystem) according to the present embodiment is a system that provides services for tracking and analyzing an object, and searching and analyzing a 3D map, videos, or images. To realize the services, the system is connected to camera systems. In the present embodiment, the camera systems will be referred to as NICE capture devices. The NICE capture devices may be assumed to be monitoring cameras in cities, security cameras in smart homes, wearable cameras, drones, dashboard cameras, and so on.

FIG. 1 is a schematic diagram illustrating an entire makeup of an information processing system including a NICE system (server) 200 and NICE capture devices (image capturing devices) 100. Preferably, the NICE system 200 includes a cloud server, and the NICE system 200 and the NICE capture devices 100 constitute the information processing system according to the present embodiment.

The NICE system 200 controls the NICE capture devices 100 to analyze a scene in order to produce a 3D map such as for SLAM (Simultaneously Localization and Mapping) for capturing images of objects. In addition, the NICE system 200 can perform postprocessing on videos captured and recorded by the NICE capture devices 100 for the purpose of tracking an object, producing a 3D map, and producing metadata in a scene in order to search videos. As illustrated in FIG. 1, synchronous processing is performed between the NICE capture devices 100 in order to acquire depth information. Further, the NICE capture devices 100 acquire a video of the same scene with different spectrums at the same time for analyzing an event. A GPS (Global Positioning System) provides information regarding absolute positions and absolute times, and an LPWA (Low Power Wide Area) system is able to acquire the positions of the respective NICE capture devices 100.

FIG. 2 is a schematic diagram illustrating specifications required of NICE devices. The NICE system 200 guesses the position, direction, speed, and the like of an object 10, using the NICE capture devices 100. The NICE capture devices 100 transmit video data, audio data, and sensor data to the NICE system 100 through wireless communication.

FIG. 3 is a schematic diagram illustrating a NICE capture device 100. In order to provide services efficiently, the NICE capture device 100 has sensors, etc. for obtaining absolute times and absolute positions from the GPS. In addition, the NICE capture device 100 also has a measurement system such as an AHRS for obtaining an image capturing direction based on a world axis. Furthermore, the NICE capture device 100 includes a sensor such as a ToF sensor for measuring the distance to an object. Note that configurational details of the NICE capture device 100 will be described later.

According to NICE specifications, the NICE capture device 100 has its system defined in order to efficiently measure an object and capture its image. For example, system definitions of the NICE capture device 100 include image sensor and lens capabilities, pan/tilt/zoom detail determination, determination of reasonable control details for obtaining correct image capturing directions, and IMU accuracy.

In addition, the NICE system 200 has a user interface defined for controlling the NICE capture devices 100 and then handling many videos that have been accumulated. This means that the specifications of the NICE define a display system coacting with the NICE system. The display system for the NICE system is referred to as a NICE presentation device 300 in the present description. The NICE presentation device 300 is assumed to be a computer such as a smartphone that can be held by one hand or a head-mount display such as a VR system or an AR system. The NICE presentation device 300 has specifications defining a system of its own device and the user interface. FIG. 21 is a schematic diagram illustrating the manner in which the NICE capture devices 100 and the NICE presentation devices 300 are connected to the NICE system 200. The NICE presentation devices 300 may directly acquire video streams from the NICE capture devices 100 through peer-to-peer communication. In addition, FIG. 24 is a schematic diagram illustrating by way of example a specific configuration of the NICE capture device 100, the NICE presentation device 300, and the NICE system 200.

The NICE system 200 controls the NICE capture device 100 and the NICE presentation device 300. On the other hand, in a use case where it is required that there is no standby time, the NICE presentation device 300 can directly control the NICE capture device 200. Then, the plural NICE capture devices 200 can communicate with each other in order to appropriately adjust related positions. Providing drone cameras are taken into account, it is highly important to produce a formation flight of many drones without delay.

### 2. Outline of NICE system

The NICE system 200 mainly handles information regarding absolute times/positions/directions embedded in each video frame. Pictures (images) including absolute times/positions/directions allow extraordinary variations of a new application to be understood, making technical requirements for the system clear. These specifications are applied to the following three use-case applications:
[NICE watcher] for tracking an object with plural NICE capture devices 100;
[NICE chaser] for searching videos by analyzing the behavior of a specified object; and
[NICE 3D world] for producing a 3D map with plural NICE capture devices 100.

What these applications are like and how the NICE system 200 works will be described below.

### 2.1. NICE watcher

The NICE watcher is an application for tracking an object with plural NICE capture devices 100. The NICE watcher tracks a moving object as long as the NICE capture devices 100 exist. Steps of controlling the plural NICE capture devices 100 are indicated below.
A) The user specifies an object 10 as a target with the NICE presentation system 300. FIG. 20 is a schematic diagram illustrating the manner in which the user manipulates the screen of the NICE presentation device 300 to specify the object 10. For example, the NICE presentation device 300 has a touch panel that the user can manipulate to specify the object 10 displayed on the screen.
B) The NICE system 200 measures an approximate distance from itself to the object 10 with a sensor such as a ToF sensor. The NICE system 200 already knows its own position and image capturing direction, and calculates the position and height of the object 10 at the time the distance to the object 10 is determined.
C) The NICE system 200 determines the position of the object 10 and finds free NICE capture devices 100 within the range of a reliable distance.
   The NICE system 200 already knows the positions of all the NICE capture devices 100 by acquiring positional information from the NICE capture devices 100. By recognizing the position of a NICE capture device 100 that has found the object 10 and the reliable distance to the object 10, the NICE system 200 can find other NICE capture devices 100 that are capable of tracking the object 10.
D) The NICE system 200 controls all the NICE capture devices 100 simultaneously and tracks the object 10 according to the motion of the object 10 in each frame.
   In order to calculate the direction in which and the speed at which the object 10 moves, the NICE system 200 acquires different scenes with the plural NICE capture devices 100. The NICE system 200 guesses a next position of the object 10 in order to smoothly control all the NICE capture devices 100 that capture the object 10.
E) The NICE system 200 manages a group of NICE capture devices 100 according to the motion of the object 10.

The NICE system 200 manages devices fixed as NICE capture devices 100 and mobile devices such as drones. Drone cameras are controlled by the NICE system 200 so as to track an object not related to a position.

The NICE watcher provides a process of efficiently tracking an object without involving user's troublesome operations.

A process of tracking the object 10 in real time will hereinafter be described with reference to FIGS. 4 through 7. Note that, in FIGS. 4 through 7, it is assumed that the object 10 exists at a predetermined height from the ground, and the position of the object 10 as projected onto the ground is indicated by the sign X. As illustrated in FIG. 4, first, the user specifies the object 10 as a target using the NICE presentation system 300. Then, the NICE system 200 monitors any one of the NICE capture devices 100 and transmits a command to the NICE capture device 100 to measure the distance to the object 10. The NICE capture device 100 measures an approximate location of the object 10 (the distance to the object 10), using a ToF sensor or the like of its own. When the position of the NICE capture device 100 and the distance to the object 10 are transmitted to the NICE system 200, a recognition engine of the NICE system 200 captures the object 10 and recognizes an approximate position of the object 10 (primary scan).

Next, as illustrated in FIG. 5, the NICE system 200 gains control over other NICE capture devices 100 that exist in an area (indicated by the broken line in FIG. 5) around the approximate position of the object 10.

Next, as illustrated in FIG. 6, the NICE system 200 time-synchronizes frames recorded in videos captured by the NICE capture devices 100, according to absolute times, and predicts motion of the object 10 between frames according to the latitudes, longitudes, and heights of the frames and object recognition, guessing a next position. The guessed result is transmitted to the NICE presentation system 300 of the user for feedback to the user.

Furthermore, as illustrated in FIG. 7, in the case where the NICE capture devices 100 are fixed cameras, the NICE system 200 predicts a next position of the object 10, thereafter gains control over NICE capture devices 100 that exist around the next position of the object 10, and repeats the same process as described above. In addition, in the case where the NICE capture devices 100 are mobile bodies such as drones, the NICE system 200 controls them to track the object 10.

### 2.2. NICE chaser

The NICE chaser is an application for searching videos captured by the NICE capture devices 100. The NICE chaser provides a function of picking up videos in which the object 10 designated by the user is automatically captured. Steps of searching videos are indicated below.
A) The user determines the object 10 from a video according to the NICE format.
B) The NICE system 200 determines a time and a position from the video.
C) The NICE system 200 searches videos captured by other NICE capture devices 100, on the basis of the time and the position.
D) The NICE system 200 analyzes an accurate position of the object 10 and its motion from collected videos, and determines a direction of the object 10.
E) By collecting the videos, the NICE system 200 that has searched for the object 10 on the basis of the position and the direction of the object 10 analyzes the object again.

In the manner described above, the NICE chaser provides an effective video searching process for a tracked object captured by the NICE capture devices 100.

A process of tracking an object from recorded videos will hereinafter be described on the basis of FIGS. 8 through 11. As illustrated in FIG. 8, the user designates a particular object 10 from a recorded video using the NICE presentation device 300. The NICE system 200 specifies the object 10 by way of object recognition.

As illustrated in FIG. 9, a video 20 in which the designated object 10 is captured by a close camera is picked up on the basis of the positions, times, and image capturing directions of the object 10 recorded in frames of videos 20 captured by NICE capture devices 100. Note that, in FIG. 9, the positions that are indicative of the respective videos 20 represent the positions of the NICE capture devices 100 that have captured the respective videos 20.

As illustrated in FIG. 10, the videos 20 are time-synchronized on the basis of recorded absolute times. Then, the NICE system 200 guesses the position and the height of the object 10 on the basis of positions and image capturing directions of the object 10 recorded in a plurality of videos 20, calculates a moving direction of the object 10 specified by way of image recognition, and guesses a next location of the object 10.

As illustrated in FIG. 11, after the next guessed position and time of the object 10 has been determined, a video 20 that captures the object 10 around the next position is picked up, and the same process as described above is repeated to track the object 10.

### 2.3. The NICE 3D world

The NICE 3D world is an application for producing a free-viewpoint video (3D world) with NICE capture devices 100. Once the user specifies the position of the object 10, the NICE system 200 gathers NICE capture devices 100 around the specified position. Then, the NICE system 200 produces a free-viewpoint video such that the NEC presentation device 300 can visually perceive the video. Steps of producing a free-viewpoint video are as described below.
A) The user determines, for illustration, a position and a time by designating them on a map on the NICE presentation device 300.
B) The NICE system 200 gathers NICE capture devices 100 around the designated position. Then, the NICE capture devices 100 obtain scenes of videos captured around the designated position.
   The NICE capture devices 100 acquire scenes in a special mode to obtain a wide angle for the purpose of producing a 3D map efficiently. Meanwhile, the NICE capture devices 100 have different capabilities and characteristics. For turning the images into maps for a 3D world, the NICE system 200 corrects distortions of FOV or the respective scenes. For this reason, the NICE capture devices 100 transmit their capabilities and characteristics to the NICE system 200.
C) The NICE system 200 analyzes the scenes acquired by the NICE capture devices 100 and produces a free-viewpoint video at the location.
D) When the user changes the designated position, the NICE system 200 gathers the NICE capture devices 100 again according to the designated position, and produces a free-viewpoint video again.

The NIDE 3D world provides a free-viewpoint video in real time. The NIDE 3D world makes it possible for the user to virtually move anywhere in the world through the free-viewpoint video.

### 3. Outline of NICE capture device

A NICE capture device 100 transmits information collected from sensors mounted on itself, through a network, to other devices in order to have them recognize a NICE world. The data to be transmitted includes, for example, RGB color images, their own positional information, a depth map, a thermograph map, audio, positions measured by a GPS, atmospheric pressures, temperatures, behaviors, moving speeds, accelerations, and so on.

An intelligent NICE capture device 100 analyzes acquired data in order to transmit them as information that is easier to handle. The information represents ranges, the types of objects, coordinates, moving speed, moving directions, colors, the facial expressions of persons, the identifications of persons, car registration numbers, the number of people, and so on.

Furthermore, some NICE capture devices 100 have active functions including LED light, PTZ control, and sound alarms. The NICE capture device 100 basically has a function of transmitting acquired information to the NICE system 100. On the other hand, the NICE capture device 100 may have a bidirectional communication function.

The NICE capture device 100 is constructed as a system of any of various types including a monitoring camera, a home security camera, a smart home agent as the central core of home automation, a wearable camera, a drone, and car dashboard camera.

Here, the NICE capture device 100 and its data format for transmitting data to the NICE system 200 are defined. Moreover, in subsequent sections, the profile of a system for the devices guessed by the NICE system 200 will be defined.

A central function of the NICE capture device 100 is a combination of sensor fusion and a camera. It means that the NICE capture device 100 behaves as both a network camera and the NICE capture device 100 according to the present embodiment. In the case where the NICE capture device 100 is connected to an existing network on the basis of ONVIF (Open Network Video Interface Forum), it also behaves as an ONVIF camera. On the other hand, in the case where the NICE capture device 100 is connected to the NICE system 200, it behaves as the NICE capture device 100 as described above.

For understanding accurate control, a reference system for the NICE capture device 100 defines the capabilities of its components. Further, the data format of the NICE capture device 100 is defined on the basis of ONVIF in order to keep interoperability between itself and the technology of current network cameras.

The NICE capture device 100 acquires not only images but also metadata relating to images such as absolute times/positions/directions of frames. Since there is a plurality of processes for obtaining these kinds of data, systems are different according to the characteristics of applications. For example, in the case of a monitoring camera, as the position of the NICE capture device 100 is fixed, a position sensor such as a GPS receiver may be made unnecessary by holding information regarding the fixed position.

### 3.1. Configurational example of NICE capture device

FIG. 12 is a block diagram illustrating the configuration of a NICE capture device 100. As illustrated in FIG. 12, the NICE capture device 100 has a camera module 102, a range-finding sensor 104, an IMU (Inertial Mmeasurement Uunit) 106, a controlling section 120, a GPS 108, and a communication module 110.

The camera module 102 basically includes a module of an image-capturing element such as a CMOS sensor and optical lenses, for controlling image capturing conditions (pan, tilt, zoomed position, and focused position) of a camera. FIG. 22 is a schematic diagram illustrating the optical lenses included in the camera module 102. The distance to the object 10 can be acquired on the basis of the specifications of the optical lenses and the focused position. Moreover, a positional shift of the object 10 from an image capturing direction can be determined on the basis of the specifications of the optical lenses and a shift of the object 10 from the optical axis. The range-finding sensor 104 is a sensor such as a ToF sensor, and measures the distance to the object 10. In the case where the camera module 102 is a stereo camera, the distance to the object 10 can also be determined on the basis of the parallax between left and right images. Moreover, the object 10 can be determined on the basis of the position of the object 10 with respect to the NICE capture device 100 thus obtained and the position of the NICE capture device 100. In addition, a depth map is produced on the basis of information regarding the distance to the object 10.

The controlling section 120 is a component for controlling the NICE capture device 100 in its entirety. The controlling section 120 has a function of transmitting acquired image information, image capturing conditions of the camera, sensor information, information regarding the distance to the object 10, and so on to the NICE system 100 through the communication module 110 via a wireless link. Note that the type of wireless communication and the kind of a wireless network are not limited to any particular type and kind, and may be any of existing types and kinds. FIG. 23 is a schematic diagram illustrating by way of example another configuration of the NICE capture device 100. As illustrated in FIG. 23, the NICE capture device 100 may further include motors 121 and 122 for generating drive forces for moving itself and a microphone for acquiring speech sounds. Further, the camera module 102 may include an actuator 112 for adjusting pan, tilt, a zoomed position, and a focused position. The motors 121 and 122 and the actuator 112 are controlled on the basis of control commands transmitted from a camera controlling section 206 of the NICE system 200. On the basis of the position of the object 10 that is included in the control command, the pan, the tilt, the zoomed position, and the focused position are adjusted in order for the NICE capture device 100 to capture an image of the object 10, or control is performed to have the NICE capture device 100 track the object 10.

FIG. 13 is a schematic diagram illustrating a video recording format by way of example. Specifically, FIG. 13 illustrates video data frames of a video recording format recorded by the NICE capture device 100, and information representing image capturing absolute times recorded correspondingly to the video data frames, absolute positions of the NICE capture device 100, and image capturing directions of the NICE capture device 100. As illustrated in FIG. 13, the image capturing absolute time, the absolute position, and the image capturing direction corresponding to each video frame are recorded for each video frame. The video recording format illustrated in FIG. 13 is transmitted from the NICE capture device 100 to the NICE system 200.

### 4. Configurational example of NICE system (server)

FIGS. 14, 15, and 16 are schematic diagrams illustrating the components of the NICE system 200 side. FIG. 14 is a schematic diagram illustrating by way of example the configuration of a server of the NICE system 200. As illustrated in FIG. 16, the NICE system 200 has a video synchronizing section 202, an object recognizing section 204, a camera controlling section 206, an object position guessing section 208, and a database 210.

As illustrated in FIG. 6, the video synchronizing section 202 performs a process of time-synchronizing frames recorded in videos captured by the respective NICE capture devices 100, according to absolute times. The object recognizing section 204 performs a process of searching the frames recorded in videos captured by the respective NICE capture devices 100 and recognizing the object 10 that the user has designated from among the frames. In the case where the user specifies the object 10 as illustrated in FIG. 20, for example, the object recognizing section 204 recognizes a feature quantity of the specified image, performs matching on each frame of the video to thereby recognize the object 10, and identifies the position of the object 10. As described above, the object recognizing section 204 can identify the position of the object 10 on the basis of the relative positions of the NICE capture devices 100 and the object 10 and the positions of the NICE capture devices 100. The camera controlling section 206 transmits a control command to the NICE capture devices 100 to control the NICE capture devices 100, particularly the camera modules 102 thereof. Specifically, the camera controlling section 206 gains control over NICE capture devices 100 that exist around the object 10, and controls the NEC capture devices 100 to capture an image of the object 10. Furthermore, in the case where the NICE capture devices 100 are mobile bodies such as drones, the camera controlling section 206 moves the NICE capture devices 100 according to motion of the object 10. The object position guessing section 208 predicts motion of the object 10 between frames and guesses a next position of the object 10, on the basis of the latitudes, longitudes, heights, and image capturing directions of the frames that have been time-synchronized according to the absolute times.

The database 210 stores various kinds of data. FIG. 15 is a schematic diagram illustrating information of a camera database relating to NICE capture devices 100, among the pieces of information stored in the database 210. As illustrated in FIG. 15, the camera database stores information regarding current positions of the cameras (the NICE capture devices 100). In the case where the NICE capture devices 100 are mobile bodies such as drones, the information regarding the current positions stored in the camera database is sequentially updated according to the positional information transmitted form the NICE capture devices 100.

Further, FIG. 16 is a schematic diagram illustrating information of a video database of the NICE system 200. The information illustrated in FIG. 16 is obtained by receiving the information illustrated in FIG. 13 from the NICE capture devices 100. As illustrated in FIG. 16, information regarding image capturing times, image capturing positions, and image capturing directions is stored with respect to respective videos captured by the NICE capture devices 100. More specifically, as illustrated in FIG. 13, capturing absolute times, absolute positions, and capturing directions of the respective frames are also recorded in the video database.

A process of guessing the position of the object 10 with the object position guessing section 208 will hereinafter be described in detail. FIGS. 17 through 19 are schematic diagrams illustrating a procedure for guessing the position of the object 10. FIG. 17 illustrates the manner in which three NICE capture devices 100 capture respective images of the object 10 and frames of the videos captured by the NICE capture devices 100. Here, the three NICE capture devices 100 are referred to as CAM1, CAM2, and CAM3. FIG. 17 illustrates images of a frame N and images of a frame N+1 that are captured respectively by CAM1, CAM2, and CAM3.

In FIG. 17, the object 10 is moving in the direction indicated by the arrow A1. Therefore, the object 10 is positioned at the center of an image 30 of the frame N from CAM1 and at the left end of an image 32 of the frame N+1 from CAM1. Moreover, the object 10 is positioned at the center of an image 34 of the frame N from CAM2 and at the right end of an image 36 of the frame N+1 from CAM2. Furthermore, the object 10 is positioned at the center of an image 38 of the frame N from CAM3 and at the center, slightly to the right, of an image 40 of the frame N+1 from CAM3.

FIG. 18 illustrates the manner in which the position of an object is predicted on the basis of the images 30, 32, 34, 36, 38, and 40 illustrated in FIG. 17 and the NICE capture devices 100 are controlled. As illustrated in FIG. 18, the video synchronizing section 202 synchronizes the images of the respective frames from CAM1, CAM2, and CAM3. Specifically, the images 30, 34, and 38 are synchronized, and the images 32, 36, and 40 are synchronized. The synchronized images are input to the object recognizing section 204, which recognizes the object 10. The backgrounds are thus removed from the images 30, 32, 34, 36, 38, and 40, allowing the object 10 alone to be recognized.

The images 30, 32, 34, 36, 38, and 40 from which the object 10 has been recognized by the object recognizing section 204 are input, along with the positional information representing the image capturing locations and the information representing the image capturing directions, to the object position guessing section 208. The object position guessing section 208 guesses a next position of the object 10 on the basis of the image capturing positions and the image capturing directions of respective CAM1, CAM2, and CAM3, the positions of the object 10 in the images 30, 32, 34, 36, 38, and 40, and the specifications of CAM1, CAM2, and CAM3 (zooming information such as focal lengths and information such as focused positions of the object 10). The camera controlling section 206 transmits a control command to CAM1, CAM2, and CAM3 on the basis of the next position of the object 10, to control CAM1, CAM2, and CAM3. The controlling of CAM1, CAM2, and CAM3 includes controlling of the image capturing directions of CAM1, CAM2, and CAM3, controlling of motion of CAM1, CAM2, and CAM3, and so on.

Further, FIG. 19 is a schematic diagram illustrating an example in which a video synchronizing section 202, an object recognizing section 204, and an object position guessing section 208 perform processes similar to those illustrated in FIG. 18 with respect to the images 30, 32, 34, 36, 38, and 40 obtained in a manner similar to that in FIG. 17, and a guessed position of the object that is obtained is stored in a database 210.

The preferred embodiment of the present disclosure has hereinbefore been described in detail with reference to the accompanying drawings. However, the technical scope of the present disclosure is not limited to the examples of the embodiment. It is obvious that those who have an ordinary knowledge in the technical field of the present disclosure could envisage various changes and modifications within the scope of the technical concept described in the scope of claims for patent, and it should be understood that those changes and modifications fall of necessity within the technical scope of the present disclosure.

In addition, the advantages referred to in the present description are explanatory or illustrative only, and not restrictive. In other words, the technology according to the present disclosure may present other advantages that are obvious to those skilled in the art in view of the present description, together with or instead of the advantages described above.

Note that, the following arrangements also belong to the technical scope of the present disclosure.
(1) An information processing system including a plurality of image capturing devices and a server that acquires video information from a plurality of the image capturing devices, in which
   the server has
   an object recognizing section that recognizes a particular object from the video information, and
   a guessing section that guesses motion of the particular object obtained on the basis of the video information.
(2) The information processing system according to (1), further including:
   a synchronizing section that synchronizes times of plural pieces of the video information acquired from a plurality of the image capturing devices, in which
   the object recognizing section recognizes the particular object from the plural pieces of the video information whose times have been synchronized by the synchronizing section.
(3) The information processing system according to (1) or (2), in which
   the video information is transmitted from the image capturing devices to the server according to a predetermined format, and
   the predetermined format includes a video of each frame, an image capturing time of each frame, and information regarding image capturing conditions for capturing the video.
(4) The information processing system according to (3), in which
   the image capturing conditions include image capturing positions, image capturing directions, zoomed position information, or focused position information of the image capturing devices.
(5) The information processing system according to any one of (1) through (4), in which
   the object recognizing section specifies a plurality of the image capturing devices that exist around the particular object on the basis of the position of the particular object obtained from any one of the image capturing devices, and recognizes the particular object from the video information obtained from the specified image capturing devices.
(6) The information processing system according to any one of (1) through (5), further including:
   a controlling section that gains control over the image capturing devices that exist around the particular object and controls the image capturing devices.
(7) The information processing system according to (6), in which
   the controlling section controls the image capturing devices over which the controlling section has gained control, to have the image capturing devices capture an image of the particular object.
(8) The information processing system according to (6), in which
   the controlling section includes an image capturing device controlling section that moves at least some of the plural image capturing devices to a moving path of the particular object, on the basis of the motion of the particular object that has been guessed by the guessing section.
(9) The information processing system according to any one of (1) through (8), in which
   the guessing section guesses motion of the object from the video information that is acquired in real time.
(10) The information processing system according to any one of (1) through (8), in which
   the server includes a database for storing the video information, and
   the guessing section guesses motion of the object from the video information that was captured in past and stored in the database.

### [Reference Signs List]

- 100: NICE capture device
- 200: NICE system
- 202: Video synchronizing section
- 204: Object recognizing section
- 206: Camera controlling section
- 208: Object position guessing section
- 210: Database

## Claims

1. An information processing system comprising:
a plurality of image capturing devices; and
a server that acquires video information from a plurality of the image capturing devices, wherein
the server includes
an object recognizing section that recognizes a particular object from the video information, and
a guessing section that guesses motion of the particular object obtained on a basis of the video information.

2. The information processing system according to claim 1, further comprising:
a synchronizing section that synchronizes times of plural pieces of the video information acquired from a plurality of the image capturing devices, wherein
the object recognizing section recognizes the particular object from the plural pieces of the video information whose times have been synchronized by the synchronizing section.

3. The information processing system according to claim 1, wherein
the video information is transmitted from the image capturing devices to the server according to a predetermined format, and
the predetermined format includes a video of each frame, an image capturing time of each frame, and information regarding image capturing conditions for capturing the video.

4. The information processing system according to claim 3, wherein
the image capturing conditions include image capturing positions, image capturing directions, zoomed position information, or focused position information of the image capturing devices.

5. The information processing system according to claim 1, wherein
the object recognizing section specifies a plurality of the image capturing devices that exist around the particular object on the basis of the position of the particular object obtained from any one of the image capturing devices, and recognizes the particular object from the video information obtained from the specified image capturing devices.

6. The information processing system according to claim 1, further comprising:
a controlling section that gains control over the image capturing devices that exist around the particular object and controls the image capturing devices.

7. The information processing system according to claim 6, in which
the controlling section controls the image capturing devices over which the controlling section has gained control, to have the image capturing devices capture an image of the particular object.

8. The information processing system according to claim 6, in which
the controlling section includes an image capturing device controlling section that moves at least some of a plurality of the image capturing devices to a moving path of the particular object, on a basis of the motion of the particular object that has been guessed by the guessing section.

9. The information processing system according to claim 1, wherein
the guessing section guesses motion of the object from the video information that is acquired in real time.

10. The information processing system according to claim 1, wherein
the server includes a database for storing the video information, and
the guessing section guesses motion of the object from the video information that was captured in past and stored in the database.
